# EUROPEAN PATENT APPLICATION

(11) **EP 4 311 438 A1**
(43) Date of publication of application: **31.01.2024**
(21) Application number: 22187039.7
(22) Date of filing: 26.07.2022
(51) Int. Cl.: A23L 21/10, A23L 19/00, A23L 29/00, A23L 33/21

(54) **METHOD FOR PRODUCING HOMOGENEOUS FOOD COMPOSITIONS**

(71) Applicant: Agrana Beteiligungs- Aktiengesellschaft, 1020 Wien (AT)
(72) Inventor: The designation of the inventor has not yet been filed
(74) Representative: SONN Patentanwälte GmbH & Co KG

(57) **Abstract**

Disclosed is a method for the production of a stable and homogeneous food composition, especially fruit preparation, comprising the steps of addition of active xylanase to plant fibre to perform an enzymation step, followed by addition of fibre solution to other food ingredients.

## Description

The present invention relates to a method for producing food compositions.

### Background of the invention

Fruit and non-fruit preparations - is a convenient way to deliver ingredients such as fruits, chocolate and cereal pieces, colour, flavour to a variety of foods, including yoghurts, dairy drinks, plant-based yoghurt alternatives, ice-cream. The preparation should ensure homogeneity of all the ingredients (fruit and cereal pieces, mineral salts, colours and flavours) of the final food composition. The homogeneity is guaranteed by addition of stabilizers.

Stabilization of food preparations with fibre is attractive for many reasons. Fibre answers the requirements for the hydrocolloids as it provides shear-thinning behaviour and has neutral taste. Citrus and apple fibre is made whether from juice or pectin industry waste, so this is a sustainable raw material with a very stable supply, the same applies to potato fibre which is waste from the starch processing. All the fibres have nutritional benefits for consumers, especially citrus fibre which is high in soluble fibre.

Another smart reason to use fibre in preparations for dairy industry is that the fibre has no E-number therefore it brings natural image to the product. So, it is very attractive to develop a product with fibre as the only stabilizer. However, in this case there is a number of challenges.

First of all, fibre is required in relatively high quantity to stabilize the recipe (3-4% for potato and apple fibre, 2-2.5% for citrus fibre). To incorporate this amount of fibre, high quantity of liquid is required in a recipe. If the fibre is added dry, there is risk of lumps in the product.

Second challenge that during the storage of the products inhomogeneous viscosity develops within the storage tank (typically 800 I stainless steel tote). The viscosity gradient generated by such storage leads to not equal distribution of ingredients (e.g., fruit pieces) within the food composition and creates problems on the client's side during the pumping of the product from the tote.

Finally, the fibre (especially apple and potato fibre) provides very pulpy mouthfeel to the product. This limits the usage of fibre for stabilization.

Due to these reasons potato or apple fibre are seldomly used as a stabilizer.

High shear treatment applied to the citrus fibre suspension allows to partly overcome these issues; it makes product's mouthfeel less pulpy and reduces viscosity gradient. However, high shear mixers require a significant investment.

It is an object of the present invention to make use of the excellent properties of xylanase-treated fibres, especially plant fibres, in the food industry to improve food compositions, especially to improve homogeneity and/or storage performance of such food compositions. Moreover, it is an object to allows to provide stable food compositions with an increased viscosity, a reduced viscosity gradient and with an improved mouthfeel. It is also an object of the present invention to provide methods for producing plant fibre containing food compositions wherein separation of the solid fibre after enzymatic treatment is not required for stabilization of preparations.

### Summary of the invention

Therefore, the present invention provides a method for use of xylanase-treated plant fibres for food compositions. The present invention further provides a method for improving stability of food compositions by addition of xylanase-treated plant fibres. The present invention also provides a method for producing homogeneous food compositions comprising addition of xylanase-treated plant fibres. The present invention especially provides a method for improving homogeneity of a food composition wherein xylanase-treated plant fibres are added to a food composition. Accordingly, the present invention also provides a method for producing plant fibre containing food compositions wherein separation of solid fibres is not required, preferably wherein such separation after an enzymatic treatment is not required for stabilization of the food compositions.

The process of treatment of fibre with xylanase as used in the present invention and as described below allows to achieve the stable preparation with increased viscosity, reduced viscosity gradient and with improved mouthfeel. This process can be considered as an alternative to high shear treatment of fibre solution.

The main results and effects achieved with the process according to the present invention are therefore:
1. Increase of homogeneity in the food composition. Less viscosity difference between upper and lower parts of the preparation as was verified by an appropriate method as disclosed in the example section.
2. Smoother texture. Food composition without xylanase treatment has mouthfeel which is described by sensory panel as "pulpy", "rough". At the same time the food composition after treatment is more "smooth" and "creamy" results provided by the sensory panel of Agrana Fruit US.
3. Higher viscosity (as measured by rotational viscometer) and lower flowability in Bostwick consistometer. Change of Bostwick flowability was not always (and not for all kinds of fibres) observed.
4. Especially with citrus fibre a product was obtained which has smooth texture and can be totally homogeneous even if no external stabilizers are added. In case of other fibres addition of secondary stabilizer may be advantageous and/or required and the mouthfeel may in certain cases remain "pulpy". Nevertheless, still positive effect was observed also with other fibres.

### Detailed description

Xylanase (EC 3.2.1.8) is a class of enzymes that degrade the linear polysaccharide xylan into xylose, thus breaking down hemicellulose, one of the major components of plant cell walls. Xylanase is therefore an enzyme acting on hemicellulose. It can be produced from a variety of bacteria, fungi or yeast. Xylanase is used for juice purification and bread making and is therefore available in food-grade quality (Bhardwaj et al. Bioresour. Bioprocess. (2019) 6:40).

Treatment of citrus fibre with an enzyme composition containing xylanase is already described in an article of Song et al. in Food Hydrocolloids 121 (2021) 107015 and the CN patent application CN 113317515 A1. The process includes citrus fibre treatment with enzyme, deactivation of the enzyme and drying and milling of the fibre. The fibre from this process is reported to have higher water binding capacity.

In contrast to this prior art relevant for xylanase treatment of citrus fibres to obtain improved fibre preparations, in the course of the present invention it was revealed that for providing stabilised food compositions, separation of the solid fibre after enzymatic treatment is not required for stabilization of the food compositions according to the present invention. On the other hand, as the enzymation is done during the production, processing time is much shorter. It can preferably be 5 to 30 minutes, especially of 7 to 13 minutes, and is typically 10 minutes. With the present invention, the food compositions surprisingly turned out to have less viscosity gradient in preparations; as an additional benefit better mouthfeel (more smooth, less pulpy) is achieved.

In the article of Song synergistic effect of high shear and enzymation is described. Although this observation was in principle confirmed in the trials which led to the present invention, surprisingly it was shown by the present invention that the xylanase treatment can even be used as a full substitute for high sheer treatment. Accordingly, it was found that high shear mixer (e.g. rotor-stator mixer, colloid mill or homogenizer) was no longer required to achieve stabilization. Strong agitation in a cooking vessel was enough to improve the homogeneity, viscosity and mouthfeel of the food compositions according to the present invention. Moreover, in case of citrus fibre significant improvement of the product even without agitation was observed.

According to a preferred embodiment, the method according to the present invention comprises the steps of addition of an enzyme composition containing active xylanase to a plant fibre preparation, especially a plant fibre dispersion, followed by optional addition of other ingredients and inactivation of the enzyme in the fibre preparation to obtain a stable preparation of the xylanase-treated fibre, especially as a dispersion, and addition of the xylanase-treated fibre preparation to a food composition to obtain a food composition wherein the xylanase-treated fibre preparation is homogeneously dispersed, wherein the resulting food composition comprising homogeneously distributed xylanase-treated fibres has an improved homogeneity on storage, preferably wherein the viscosity of the food composition at the top of the composition and the viscosity of the food composition at the bottom of the composition differ by less than 10 % after storage, if measured by a rotational viscosimeter and wherein the top of the composition is defined as the upmost 10 % volume of the composition and the bottom of the composition is defined as the lowest 10 % volume of the composition, and wherein storage means storage of at least 24 h at a temperature of 10°C.

Preferably, method according to the present invention comprises addition of pectin methylesterase to an enzyme composition used for treatment with xylanase.

According to a preferred embodiment of the present invention, the fibres are provided as a slurry and wherein this slurry is additionally subjected to high-shear treatment, preferably by means of agitation or pumping.

Preferably, the xylanase-treated fibres are selected from citrus, apple of potato fibre or other cellulose and hemicellulose containing fibers, especially wherein the xylanase-treated fibres are citrus fibres.

According to a preferred embodiment, the food composition is selected dairy, bakery or confectionary products, fruit products comprising fruits in the form of fruit puree, fruit juice, fruit pieces, whole fruits or mixtures thereof.

Preferably, the food composition contains further agricultural ingredients in various formats, preferably vegetables, flavors, colors extracts and concentrates; and/or further contains nutritional components, preferably cereals, seeds, nuts, or mixtures thereof.

Preferably, the composition further contains additional stabilizers, preferably guar, starch, locust bean gum (LBG), xanthan, pectin, carrageenan, gellan gum, carboxymethylcellulose (CMC). According to a preferred embodiment, the xylanase treatment is performed for a duration of 5 to 30 minutes, preferably of 7 to 13 minutes, especially of 10 minutes.

A specifically preferred process according to the present invention comprises of the following steps:
1. Preparation of fibre suspension that includes fibre, water and optionally other ingredients like sugar or other soluble carbohydrates, trisodium citrate or other acidity regulators, and fruit or non-fruit purees. Fibre suspension may have between 0.5 to 10% fibre, preferably from 2 to 6%. It should have Brix <70, preferably Brix <30; pH range 3.2 to 7, preferably 4 to 5.
2. Treatment with the enzyme composition. The enzyme must have xylanase activity and it can also have cellulase and glucanase side activities. Enzyme composition may also include pectin methyl esterase enzyme (PME). Fibre enzymatic treatment can preferably be done in one or two steps. In one-step process the treatment is done at temperatures below 55°C, preferably between 35 and 45°C at pH 3-7, preferably 4-5. The treatment is done for the time between 3 minutes to 3 hours, preferably 5-15 minutes. In two-step process the temperature is first adjusted for the PME enzyme (depending on the optimal temperature indicated and known for the PME preparation, e.g., to 45°C) and then adjusted for the xylanase enzyme (depending on the optimal temperature indicated and known for the xylanase preparation, e.g., to 60°C).
3. Optionally high shear treatment can be applied before the enzymation, during the enzymation process or during the transfer of the fibre suspension/dispersion, especially the citrus fibre dispersion, into the cooking vessel. Preferred way is applying the shear during or after enzymation. High shear may be applied by the means of stirring, pumping and combination of these methods.
4. Mixing of citrus fibre slurry with the rest of ingredients (e.g., fruit pieces, colours, flavours, acids, and any other permitted ingredients and additives according to local regulations)
5. Pasteurization and deactivation of enzymes. All the enzymes present in the mixture, including beta-glucanase and cellulase should be completely deactivated at pasteurization temperature.

When citrus fibre is added to water the viscosity is developed immediately. However, the final viscosity may also be affected by the conditions of hydration. Sugar has negative effect on the hydration process, but it can be used to reduce the amount of water in the recipe. Low pH has a strong negative effect on hydration; therefore, addition of sodium citrate or other acidity regulators can improve the hydration process of the fibre; it also helps to adjust pH to the level which is optimal for the enzymes. Apple and potato fibre dispersion in water has lower viscosity, so the fibre can be added in higher quantities.

Preferred enzyme composition for citrus fibre treatment includes both xylanase and PME enzymes. Addition of PME, which is an enzyme acting on native pectin present in the fiber converting HM into LM pectin, reinforces the viscosity, increases yield stress and reduces the fiber amount needed in the final food composition and is therefore a preferred embodiment of the present invention.

The ratio between these enzymes may be individually optimised by methods known to the person skilled in the art any may vary from one recipe for a food composition to another and also with the fibre type. In some cases, xylanase has higher impact on the viscosity (fibre from pectin waste, neutral pH, low brix), in other cases PME has higher effect (fibre from juice processing, low pH and high Brix). But in all cases only xylanase is responsible for the changes in mouthfeel of the preparations. Commercial xylanases very often have glucanase and cellulase side activities. Trials were done with pure xylanase enzyme, however, it was observed that commercial enzymes with cellulase and glucanase activities can be successfully used for enzymatic treatment of citrus fibre. In this case all the enzymes have to be deactivated. According to a preferred embodiment of the present invention, the food composition comprises homogeneously distributed xylanase-treated fibres and has an improved homogeneity on storage, wherein storage means storage of at least 7 days, preferably at least 10 days, especially at least 14 days, at a temperature of 10°C.

According to a preferred embodiment of the present invention, the food composition comprises 0.5 to 20% (% w/w), preferably 0.5 to 10% (% w/w), especially 0.6 to 5% (% w/w), xylanase-treated fibres.

According to a preferred embodiment of the present invention, the food composition comprises 1 to 5 % (% w/w), preferably 3 to 4% (% w/w), of xylanase-treated potato fibres; and/or 1.5 to 4 % (% w/w), preferably 2 to 2.5% (% w/w), xylanase-treated citrus fibres.

According to another aspect, the present invention also relates to a food composition according to the present invention, especially a storage-stable food composition obtainable by the method according to the present invention. Accordingly, the present invention also relates to a food composition comprising xylanase-treated plant fibres and/or a food composition comprising xylanase-treated plant fibres, wherein xylanase-treated plant fibres are homogeneously distributed in the food composition and/or a food composition comprising homogeneously distributed xylanase-treated fibres and an improved homogeneity on storage, wherein the viscosity of the food composition at the top of the composition and the viscosity of the food composition at the bottom of the composition differ by less than 10 % after storage, if measured by a rotational viscosimeter and wherein the top of the composition is defined as the upmost 10 % volume of the composition and the bottom of the composition is defined as the lowest 10 % volume of the composition, and wherein storage means storage of at least 24 h at a temperature of 10°C.

The invention is further illustrated by way of the following examples, yet without being limited thereto.

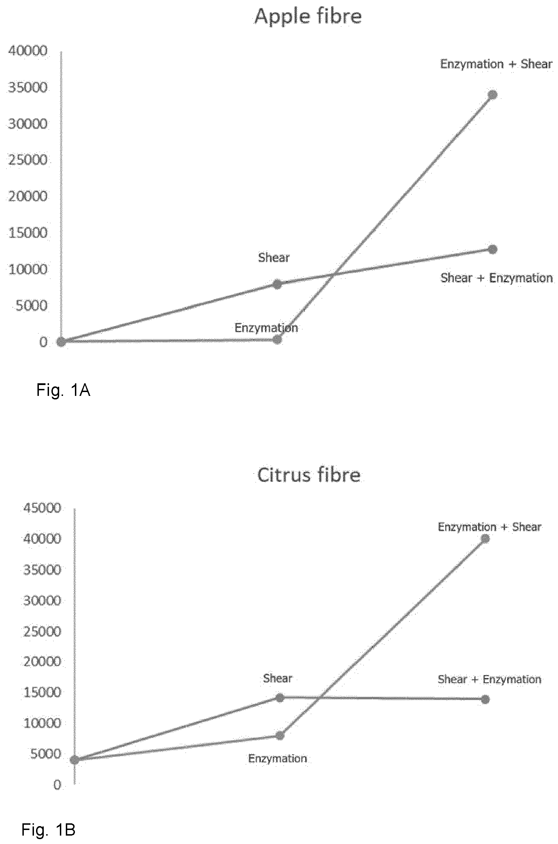

Figure 1 shows the viscosity [mPa^{∗}s] at 1 rpm of 3% aqueous suspension of apple fibre (A) and citrus fibre (B) at 60 °C.

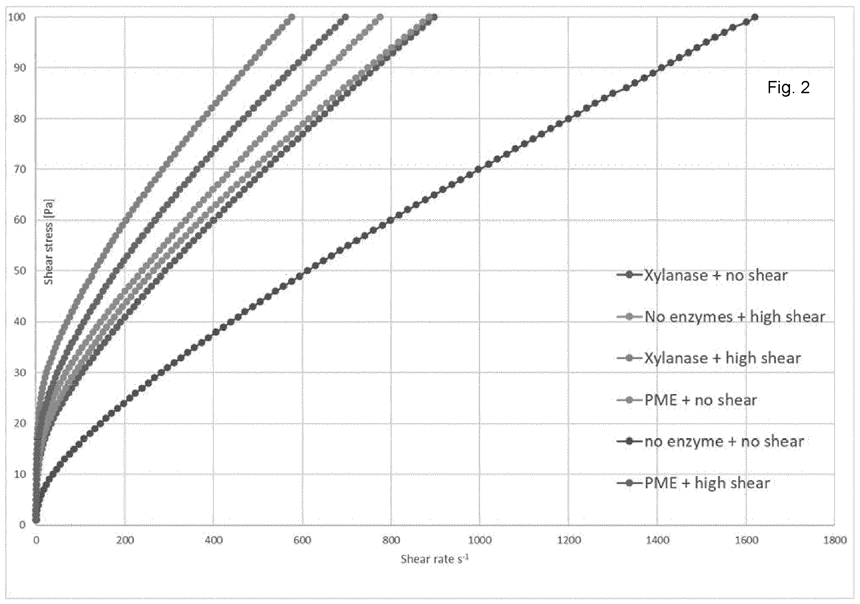

Figure 2 shows a comparison of flow curves of products: with xylanase and PME treatment with or without high shear activation.

### Example 1

Impact on the enzyme and high shear treatment on the viscosity of citrus and apple fibre dispersion. Two processes were compared. In one case 3% fibre suspension in water was subjected first to shear and then was enzymed for 8 minutes, in another case enzymation was done first and then the shear treatment was applied.

Effects of xylanase and PME in the final product depend on the type of fibre used and pH and Brix values of the final product. In preparations with neutral pH and fibre from the pectin industry the effect of xylanase is higher. At the same time, the effect of PME is observed in preparations with low pH.

### Example 2: benefits from xylanase application for viscosity of a preparation with neutral pH.

| | Control | PME | Xylanase | PME + Xylanase |
|---|---|---|---|---|
| Citrus fibre | 22 | 22 | 22 | 22 |
| Water | 678 | 677.5 | 677.5 | 677 |
| Sugar | 300 | 300 | 300 | 300 |
| Xylanase | 0 | 0 | 0.5 | 0.5 |
| PME | 0 | 0,5 | 0 | 0.5 |
| **Bostwick Cenco D+1** | **8.3** | **5.7** | **4.2** | **4.2** |
| **Stability D+14** | 48% | 82% | 93% | 96% |

All the water was used to disperse the fibre. None of the products received high-shear treatment. Both products with Xylanase and with PME and xylanase were stable after 40 days, other products were not stable already after 2 weeks.

### Example 3: Enzymatic treatment in acidic application with higher Brix

The following recipe was cooked.

| | |
|---|---|
| Fibre | 19 |
| Sugar | 400 |
| Enzyme | 0.5 |
| Water | 580.25 |
| Citric acid | 0.25 |

Below is the data for Citrus fibre from the pectin processing industry

| | **Bostwick D+1** | **Viscosity gradient D+14** |
|---|---|---|
| Control, No shear | 5.5 | 76% |
| Control + shear | 4.3 | 89% |
| Xylanase, No shear | 4.5 | 86% |
| PME, No Shear | 4.2 | 93% |
| Xylanase + shear | 4 | 92% |
| PME + shear | 3.9 | 97% |

### Example 4: real fruit preparation.

Strawberry - 40%
Water - 39.75%
Sugar - 18%
Citrus fibre - 2%
Enzyme composition - 0.05%
Lemon juice - 0.2%

Process:
- Heat water to 45 °C
- Add the enzyme composition
- Under agitation slowly add citrus fibre (can be pre-mixed with sugar 1:2)
- Agitate for 10 minutes, then transfer through a high-shear mixer to the cooking vessel add sugar and heat to 70 °C.
- Slowly add frozen fruit pieces and lemon juice
- Heat to pasteurization temperature (95°C) and pasteurize for 10 minutes
- Cool down to 30°C and fill into a container.

Standard cooked without enzyme application is acceptable (5.8 Cenco, viscosity gradient after 2 weeks 92%). The sample treated with enzyme composition has lower flowability (4 Cenco, Viscosity gradient after 2 weeks is 97%)

### Methods used

### Brix and pH

Brix and pH measurements are done using RX-5000 refractometer from Atago LTD (Japan) and pH-meter InoLab 730 WTW GmbH (Weilheim, Germany) respectively.

### Viscosity and viscosity gradient on storage.

For measurement of viscosity in rotational viscometer the sample of 70 g is taken, equilibrated at 20°C for at least 4 hours and agitated for at least 15 seconds with a spoon before the measurement. The viscosity is measured in a standardized glass cup with rotational viscometer (Anton Paar, ViscoQC 300) at 10 rpm. Depending on the viscosity of the product spindles 4, 5 or 6 are used.

To evaluate the product stability the following method is used.

The products are filled in several standardized containers (1 liter plastic cup with 9 cm diameter) and stored at +10 °C. Each container is filled with exactly 700 g of fruit preparation. For measuring viscosity gradient 70 g of product is carefully taken from top of the container, then 70 g of preparation is taken from the bottom of container and measured by the method described above. Two cups are analysed and average viscosity values are taken. Viscosity gradient is calculated as Viscosity on top/Viscosity on the bottom. The sample is stable when this ratio is between 90% and 110%.

Flow curve is recorded with Anton Paar MCR302 Rheometer. Yield stress is calculated using Herschel-Bulkley model.

### Bostwick-Flowability Measurement

Samples stored at 10 °C for 24 h are equilibrated at room temperature prior measurement. Heidolph, RZR 2102 mixing device including a propeller stirrer is then used to agitate the sample for 25 sec at a speed of 25 rpm to ensure homogeneity. The gravity driven flow is given as mm flow per 30 and 60 sec respectively, measured on a Bostwick consistometer.

### Sensorial evaluation

Sensory evaluation of the samples was done according to ISO 6658:2017. The samples with different treatment are presented to the sensory panel (15 people). In a first session list of descriptors in defined. In the following session RATA with pre-selected descriptors was done. Each sample is presented to each taster at least twice. The results are analysed statistically with XLStat and Minitab software.

Therefore, the present invention discloses the following preferred embodiments:
1. Method for use of xylanase-treated plant fibres for food compositions.
2. Method for improving stability of food compositions by addition of xylanase-treated plant fibres.
3. Method for producing homogeneous food compositions comprising addition of xylanase-treated plant fibres.
4. Method for improving homogeneity of a food composition wherein xylanase-treated plant fibres are added to a food composition.
5. Method for producing plant fibre containing food compositions wherein separation of solid fibres is not required, preferably wherein such separation after an enzymatic treatment is not required for stabilization of the food compositions.
6. Method according to any one of embodiments 1 to 5, comprising the steps of addition of an enzyme composition containing active xylanase to a plant fibre preparation, especially a plant fibre dispersion, followed by optional addition of other ingredients and inactivation of the enzyme in the fibre preparation to obtain a stable preparation of the xylanase-treated fibre, especially as a dispersion, and addition of the xylanase-treated fibre preparation to a food composition to obtain a food composition wherein the xylanase-treated fibre preparation is homogeneously dispersed, wherein the resulting food composition comprising homogeneously distributed xylanase-treated fibres has an improved homogeneity on storage, preferably wherein the viscosity of the food composition at the top of the composition and the viscosity of the food composition at the bottom of the composition differ by less than 10 % after storage, if measured by a rotational viscosimeter and wherein the top of the composition is defined as the upmost 10 % volume of the composition and the bottom of the composition is defined as the lowest 10 % volume of the composition, and wherein storage means storage of at least 24 h at a temperature of 10°C.
7. Method according to any one of embodiments 1 to 6, wherein the method comprises addition of pectin methylesterase to an enzyme composition used for treatment with xylanase.
8. Method according to any one of embodiments 1 to 7, wherein the fibres are provided as a slurry and wherein this slurry is additionally subjected to high-shear treatment, preferably by means of agitation or pumping.
9. Method according to any one of embodiments 1 to 8, wherein the xylanase-treated fibres are selected from citrus, apple of potato fibre or other cellulose and hemicellulose containing fibers, preferably wherein the xylanase-treated fibres are citrus fibres.
10. Method according to any one of embodiments 1 to 9 wherein the food composition is selected dairy, bakery or confectionary products, fruit products comprising fruits in the form of fruit puree, fruit juice, fruit pieces, whole fruits or mixtures thereof.
11. Method according to any one of embodiments 1 to 10, wherein the food composition contains further agricultural ingredients in various formats, preferably vegetables, flavors, colors extracts and concentrates.
12. Method according to any one of embodiments 1 to 11, wherein the composition further contains nutritional components, preferably cereals, seeds, nuts, or mixtures thereof.
13. Method according to any one of embodiments 1 to 12, wherein the composition further contains additional stabilizers, preferably guar, starch, locust bean gum (LBG), xanthan, pectin, carrageenan, gellan gum, carboxymethylcellulose (CMC).
14. Method according to any one of embodiments 1 to 13, wherein the xylanase treatment is performed for a duration of 5 to 30 minutes, preferably of 7 to 13 minutes, especially of 10 minutes.
15. Method according to any one of embodiments 1 to 14, comprising the following steps:
   - preparation of a plant fibre suspension that includes fibre, water and optionally other ingredients like sugar or other soluble carbohydrates, trisodium citrate or other acidity regulators, and fruit or non-fruit purees, wherein the fibre suspension has between 0.5 to 10% fibre, preferably from 2 to 6%, and a Brix <70, preferably a Brix <30; and a pH range of 3.2 to 7, preferably of 4 to 5;
   - treatment with an enzyme composition comprising xylanase activity, preferably comprising also cellulase and glucanase activities, as well as pectin methyl esterase enzyme (PME) activity, wherein the fibre enzymatic treatment may preferably be performed in one or two steps, wherein in a one-step process the treatment is done at temperatures below 55°C, preferably between 35 and 45°C and at a pH of 3 to 7, preferably of 4 to 5, for a time between 3 minutes to 3 hours, preferably 5 to 15 minutes; and wherein in a two-step process the temperature is first adjusted for the PME enzyme, preferably to 45°C, and then adjusted for the xylanase enzyme, preferably to 60°C;
   - optionally applying a high shear treatment before the enzymation, during the enzymation process or during the transfer of the fibre suspension/dispersion into the cooking vessel, preferably applying the shear during or after enzymation, especially wherein high shear is applied by means of stirring, pumping and combination of these methods;
   - mixing of the fibre suspension/dispersion, especially the citrus fibre slurry with the rest of ingredients, preferably with fruit pieces, colours, flavours, acids, and any other permitted ingredients and additives according to local regulations);
   - pasteurization and deactivation of the enzymes; and
   - finalizing the food composition to obtain a food composition with homogeneously distributed xylanase-treated fibres.
16. Method according to any one of claims 1 to 15, wherein the food composition comprises homogeneously distributed xylanase-treated fibres and has an improved homogeneity on storage, wherein storage means storage of at least 7 days, preferably at least 10 days, especially at least 14 days, at a temperature of 10°C.
17. Method according to any one of claims 1 to 16, wherein the food composition comprises 0.5 to 20% (% w/w), preferably 0.5 to 10% (% w/w), especially 0.6 to 5% (% w/w), xylanase-treated fibres.
18. Method according to any one of claims 1 to 17, wherein the food composition comprises 1 to 5 % (% w/w), preferably 3 to 4% (% w/w), of xylanase-treated potato fibres; and/or 1.5 to 4 % (% w/w), preferably 2 to 2.5% (% w/w), xylanase-treated citrus fibres.
19. Food composition comprising xylanase-treated plant fibres.
20. Food composition comprising xylanase-treated plant fibres, wherein xylanase-treated plant fibres are homogeneously distributed in the food composition.
21. Food composition comprising homogeneously distributed xylanase-treated fibres and an improved homogeneity on storage, wherein the viscosity of the food composition at the top of the composition and the viscosity of the food composition at the bottom of the composition differ by less than 10 % after storage, if measured by a rotational viscosimeter and wherein the top of the composition is defined as the upmost 10 % volume of the composition and the bottom of the composition is defined as the lowest 10 % volume of the composition, and wherein storage means storage of at least 24 h at a temperature of 10°C.
22. Food composition, obtainable by a method according to any one of embodiments 1 to 18.

## Claims

1. Method for producing homogeneous food compositions comprising addition of xylanase-treated plant fibres.

2. Method for improving homogeneity of a food composition wherein xylanase-treated plant fibres are added to a food composition.

3. Method according to claim 1 or 2, comprising the steps of addition of an enzyme composition containing active xylanase to a plant fibre preparation, especially a plant fibre dispersion, followed by optional addition of other ingredients and inactivation of the enzyme in the fibre preparation to obtain a stable preparation of the xylanase-treated fibre, especially as a dispersion, and addition of the xylanase-treated fibre preparation to a food composition to obtain a food composition wherein the xylanase-treated fibre preparation is homogeneously dispersed, wherein the resulting food composition comprising homogeneously distributed xylanase-treated fibres has an improved homogeneity on storage, preferably wherein the viscosity of the food composition at the top of the composition and the viscosity of the food composition at the bottom of the composition differ by less than 10 % after storage, if measured by a rotational viscosimeter and wherein the top of the composition is defined as the upmost 10 % volume of the composition and the bottom of the composition is defined as the lowest 10 % volume of the composition, and wherein storage means storage of at least 24 h at a temperature of 10°C.

4. Method according to any one of claims 1 to 3, wherein the method comprises addition of pectin methylesterase to an enzyme composition used for treatment with xylanase.

5. Method according to any one of claims 1 to 4, wherein the fibres are provided as a slurry and wherein this slurry is additionally subjected to high-shear treatment, preferably by means of agitation or pumping.

6. Method according to any one of claims 1 to 5, wherein the xylanase-treated fibres are selected from citrus, apple of potato fibre or other cellulose and hemicellulose containing fibers, preferably wherein the xylanase-treated fibres are citrus fibres.

7. Method according to any one of claims 1 to 6 wherein the food composition is selected dairy, bakery or confectionary products, fruit products comprising fruits in the form of fruit puree, fruit juice, fruit pieces, whole fruits or mixtures thereof.

8. Method according to any one of claims 1 to 7, wherein the food composition contains further agricultural ingredients in various formats, preferably vegetables, flavors, colors extracts and concentrates.

9. Method according to any one of claims 1 to 8, wherein the composition further contains nutritional components, preferably cereals, seeds, nuts, or mixtures thereof.

10. Method according to any one of claims 1 to 9, wherein the composition further contains additional stabilizers, preferably guar, starch, locust bean gum (LBG), xanthan, pectin, carrageenan, gellan gum, carboxymethylcellulose (CMC).

11. Method according to any one of claims 1 to 10, wherein the xylanase treatment is performed for a duration of 5 to 30 minutes, preferably of 7 to 13 minutes, especially of 10 minutes.

12. Method according to any one of claims 1 to 11, comprising the following steps:
- preparation of a plant fibre suspension that includes fibre, water and optionally other ingredients like sugar or other soluble carbohydrates, trisodium citrate or other acidity regulators, and fruit or non-fruit purees, wherein the fibre suspension has between 0.5 to 10% fibre, preferably from 2 to 6%, and a Brix <70, preferably a Brix <30; and a pH range of 3.2 to 7, preferably of 4 to 5;
- treatment with an enzyme composition comprising xylanase activity, preferably comprising also cellulase and glucanase activities, as well as pectin methyl esterase enzyme (PME) activity, wherein the fibre enzymatic treatment may preferably be performed in one or two steps, wherein in a one-step process the treatment is done at temperatures below 55°C, preferably between 35 and 45°C and at a pH of 3 to 7, preferably of 4 to 5, for a time between 3 minutes to 3 hours, preferably 5 to 15 minutes; and wherein in a two-step process the temperature is first adjusted for the PME enzyme, preferably to 45°C, and then adjusted for the xylanase enzyme, preferably to 60°C;
- optionally applying a high shear treatment before the enzymation, during the enzymation process or during the transfer of the fibre suspension/dispersion into the cooking vessel, preferably applying the shear during or after enzymation, especially wherein high shear is applied by means of stirring, pumping and combination of these methods;
- mixing of the fibre suspension/dispersion, especially the citrus fibre slurry with the rest of ingredients, preferably with fruit pieces, colours, flavours, acids, and any other permitted ingredients and additives according to local regulations);
- pasteurization and deactivation of the enzymes; and
- finalizing the food composition to obtain a food composition with homogeneously distributed xylanase-treated fibres.

13. Method according to any one of claims 1 to 12, wherein the food composition comprises homogeneously distributed xylanase-treated fibres and has an improved homogeneity on storage, wherein storage means storage of at least 7 days, preferably at least 10 days, especially at least 14 days, at a temperature of 10°C.

14. Method according to any one of claims 1 to 13, wherein the food composition comprises 0.5 to 20% (% w/w), preferably 0.5 to 10% (% w/w), especially 0.6 to 5% (% w/w), xylanase-treated fibres; and/or wherein the food composition comprises 1 to 5 % (% w/w), preferably 3 to 4% (% w/w), of xylanase-treated potato fibres; and/or 1.5 to 4 % (% w/w), preferably 2 to 2.5% (% w/w), xylanase-treated citrus fibres.

15. Food composition comprising xylanase-treated plant fibres, preferably wherein the xylanase-treated plant fibres are homogeneously distributed in the food composition, especially wherein the food compositions are obtainable by a method according to any one of claims 1 to 14.
